# EUROPEAN PATENT SPECIFICATION

(11) **EP 4 379 847 B1**
(45) Date of publication and mention of the grant of the patent: **08.04.2026**
(21) Application number: 22912053.0
(22) Date of filing: 23.12.2022
(51) Int. Cl.: H01M 4/131, H01M 4/485, H01M 4/62, H01M 10/052, H01M 4/38, H01M 4/587, H01M 4/02, H01M 4/133, H01M 4/134, H01M 4/36, H01M 4/48

(54) **NEGATIVE ELECTRODE AND SECONDARY BATTERY INCLUDING THE SAME**
NEGATIVELEKTRODE UND SEKUNDÄRBATTERIE DAMIT
ÉLECTRODE NÉGATIVE ET BATTERIE SECONDAIRE LA COMPRENANT

(30) Priority: 24.12.2021 KR 20210187852
(43) Date of publication of application: 05.06.2024
(73) Proprietor: LG Energy Solution, Ltd., Seoul 07335 (KR)
(72) Inventor: LIM, Ga-Hyun, Daejeon 34122 (KR); LEE, Chang-Ju, Daejeon 34122 (KR); MOON, Il-Jae, Daejeon 34122 (KR); WOO, Sang-Wook, Daejeon 34122 (KR); LEE, Yong-Ju, Daejeon 34122 (KR); KIM, Dong-Myung, Daejeon 34122 (KR); KIM, Je-Young, Daejeon 34122 (KR)
(74) Representative: Plasseraud IP
(86) International application number: PCT/KR2022/021256
(87) International publication number: WO 2023/121420

(56) References cited:
- JP-A- 2013 077 391
- JP-A- 2020 174 004
- KR-A- 20140 019 054
- KR-A- 20140 080 837
- KR-A- 20210 130 659
- KR-B1- 101 776 281
- KR-B1- 102 061 141

## Description

### TECHNICAL FIELD

The present disclosure relates to a negative electrode and a secondary battery including the same.

The present application claims priority to Korean Patent Application No. 10-2021-0187852 filed on December 24, 2021 in the Republic of Korea.

### BACKGROUND ART

As technical development and needs for mobile instruments have been increased, secondary batteries that as energy sources have been increasingly in demand, and thus active studies have been conducted about batteries capable of meeting various needs. Particularly, development of rechargeable secondary batteries and lithium secondary batteries having high energy density have been focused. Recently, in the development of secondary batteries, there has been a great interest in ensuring stability.

A lithium secondary battery has a structure including an electrode assembly having a positive electrode and a negative electrode, each of which includes an active material coated on an electrode current collector, and a porous separator interposed between both electrodes; and a lithium salt-containing electrolyte injected to the electrode assembly.

In such a lithium secondary battery, lithium ions reciprocate between both electrodes of a positive electrode and a negative electrode, while being deintercalated from the positive electrode active material upon the first charge, intercalated into the negative electrode active material, and then deintercalated upon the subsequent discharge. The lithium secondary battery is rechargeable by transferring energy through the above-mentioned process. Since the negative electrode active material affects the fundamental characteristics of the lithium secondary battery, and a conductive material has an effect of improving the electrical conductivity of the negative electrode active material, intensive studies have been conducted about the negative electrode active material in order to improve the fundamental characteristics of the secondary battery.

Meanwhile, the lithium secondary battery may cause explosion or ignition due to its abnormal operation conditions, such as a short-circuit, over-charged state exceeding an acceptable current and voltage, exposure to high temperature, impact caused by dropping, or the like. Therefore, active studies have been conducted to improve the safety of lithium secondary batteries currently in production through various methods, such as a structural design of batteries, improvement of the performance of an electrolyte and separator and securement of the safety of battery parts. However, at the current level of technology, studies about separators have been actualized to prevent a short circuit between the positive electrode and the negative electrode, but there is still a need for research and development of negative electrode active materials in order to improve the safety.

Meanwhile, lithium titanium oxide (LTO) negative electrodes using an LTO material show higher efficiency during charge/discharge, as compared to the conventional electrodes, and thus have been studied actively as next-generation negative electrode materials. For example, JP2013077391A discloses a negative electrode. However, LTO has a difficulty in commercialization due to its low electrical conductivity. Therefore, there is still a need for studies about LTO negative electrodes using an LTO material to improve the stability of a battery, while providing the LTO negative electrode with improved electrical conductivity.

### DISCLOSURE

### Technical Problem

The present disclosure is designed to solve the problems of the related art, and therefore the present disclosure is directed to providing a negative electrode for a secondary battery which ensures stability while providing excellent electrochemical performance.

The present disclosure is also directed to providing a negative electrode for a secondary battery having improved electrical conductivity and charge/discharge efficiency, and a secondary battery using the same.

In addition, the present disclosure is directed to providing an LTO negative electrode having improved stability against an internal short-circuit, and a secondary battery using the same.

### Technical Solution

In one aspect of the present disclosure, there is provided a negative electrode according to any one of the following embodiments.

According to the invention, there is provided a negative electrode, including:
a current collector; a first negative electrode active material layer disposed on at least one surface of the current collector; and a second negative electrode active material layer disposed on the first negative electrode active material layer, wherein the second negative electrode active material layer includes lithium titanium oxide (LTO) and single-walled carbon nanotubes (SWCNTs), the first negative electrode active material layer includes a negative electrode active material other than the lithium titanium oxide (LTO), and the second negative electrode active material layer has a loading amount of 0.1 mAh/cm² or less; and wherein the first negative electrode active material layer includes a carbonaceous active material, a silicon-based active material or a mixture thereof.

According to a further embodiment of the present disclosure, there is provided the negative electrode as defined in the first embodiment, wherein the second negative electrode active material layer has a loading amount of 0.01-0.1 mAh/cm².

According to a further embodiment of the present disclosure, there is provided the negative electrode as defined in the first or the second embodiment, wherein the second negative electrode active material has a thickness of 3 µm or less.

According to a further embodiment of the present disclosure, there is provided the negative electrode as defined in any one of the first to the third embodiments, wherein the second negative electrode active material layer has a thickness corresponding to 1-5% based on the total thickness of the first negative electrode active material layer and the second negative electrode active material layer.

According to a further embodiment of the present disclosure, there is provided the negative electrode as defined in any one of the first to the fourth embodiments, wherein the single-walled carbon nanotubes have a length of 1-30 µm.

According to a further embodiment of the present disclosure, there is provided the negative electrode as defined in any one of the first to the fifth embodiments, wherein the single-walled carbon nanotubes have an average diameter of 2-100 nm of the section orthogonal to the longitudinal direction thereof, and a BET specific surface area of 500-1,600 m²/g.

According to a further embodiment of the present disclosure, there is provided the negative electrode as defined in any one of the first to the sixth embodiments, wherein the content of the single-walled carbon nanotubes is 0.01-3 wt% based on the total weight of the second negative electrode active material layer.

According to a further embodiment of the present disclosure, there is provided a secondary battery including a positive electrode, a negative electrode and a separator interposed between the positive electrode and the negative electrode, wherein the negative electrode is the same as defined in any one of the first to the eighth embodiments.

According to a further embodiment of the present disclosure, there is provided the secondary battery as defined in the ninth embodiment, which is a lithium secondary battery.

### Advantageous Effects

The negative electrode according to an embodiment of the present disclosure can provide a secondary battery with significantly improved electrochemical performance and stability.

The negative electrode according to an embodiment of the present disclosure has improved electrical conductivity, and thus provides a battery with improved charge/discharge efficiency.

The negative electrode according to an embodiment of the present disclosure includes a negative electrode having at least two active material layers, wherein the active material layer containing lithium titanium oxide includes single-walled carbon nanotubes in combination as a conductive material, and thus can provide sufficient conductivity even with a significantly small amount of active material.

The negative electrode according to an embodiment of the present disclosure provides a secondary battery with significantly improved stability against an internal short-circuit.

The negative electrode according to an embodiment of the present disclosure undergoes a rapid drop in electrical conductivity due to the deintercalation of lithium ions in the lithium titanium oxide-containing active material layer, when a short-circuit occurs in a fully charged state, resulting in improvement of the stability against an internal short-circuit caused by an increase in the resistance in the negative electrode.

The characteristics of the negative electrode according to an embodiment of the present disclosure and the secondary battery using the same are not limited to the above-described characteristics, and the effects of the present disclosure are not limited to the above-mentioned effects, being the scope defined by the appended claims.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

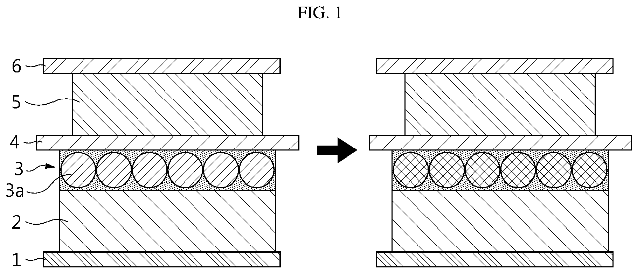

FIG. 1 is a schematic view illustrating the section of the secondary battery including the negative electrode according to an embodiment of the present disclosure, in a fully charged state and right after a short-circuit.

### DETAILED DESCRIPTION

The present invention is defined in the appended set of claims. Hereinafter, preferred embodiments of the present disclosure will be described in detail with reference to the accompanying drawings.

Throughout the specification, the expression 'a part includes or is provided with an element' does not preclude the presence of any additional elements but means that the part may further include the other elements, unless otherwise stated.

As used herein, the expression 'A and/or B' means 'A, B or both of them'.

In one aspect of the present disclosure, there is provided a negative electrode, including: a current collector; a first negative electrode active material layer disposed on at least one surface of the current collector; and a second negative electrode active material layer disposed on the first negative electrode active material layer, wherein the second negative electrode active material layer includes lithium titanium oxide (LTO) and single-walled carbon nanotubes (SWCNTs), the first negative electrode active material layer includes a negative electrode active material other than the lithium titanium oxide (LTO), and the second negative electrode active material layer has a loading amount of 0.1 mAh/cm² or less.

According to an embodiment of the present disclosure, the current collector is not particularly limited, as long as it causes no chemical change in the corresponding battery and has conductivity. Particular examples of the current collector may include copper, stainless steel, aluminum, nickel, titanium, baked carbon, copper or stainless steel surface-treated with carbon, nickel, titanium or silver, or the like. The current collector may have a thickness of 3-500 µm, but is not limited thereto.

According to an embodiment of the present disclosure, a negative electrode active material layer having a plurality of layers is disposed on the current collector. According to the present disclosure, such layers contained in the negative electrode active material layer are referred to as a first negative electrode active material, a second negative electrode active material layer, or the like, in the order adjacent to the current collector.

According to an embodiment of the present disclosure, at least one negative electrode active material layer including lithium titanium oxide (LTO) as a negative electrode active material and single-walled carbon nanotubes (SWCNTs) as a conductive material is disposed on the current collector. Herein, the negative electrode active material layer including LTO and SWCNTs is not disposed in contact with the current collector, but is disposed in contact with the negative electrode active material layer including a negative electrode active material other than LTO and disposed on the current collector. Therefore, according to the present disclosure, the negative electrode active material layer including a negative electrode active material other than LTO may be referred to as the first negative electrode active material layer, while the negative electrode active material layer including LTO and SWCNTs may be referred to as the second negative electrode active material layer.

FIG. 1 is a schematic view illustrating the secondary battery including the negative electrode according to an embodiment of the present disclosure. FIG. 1 illustrates the structure of the secondary battery in a fully charged state and at the initial stage of a short-circuit.

Particularly, in FIG. 1, a first negative electrode active material layer 2, a second negative electrode active material layer 3, a separator 4, a positive electrode active material layer 5 and a positive electrode current collector 6 are stacked successively on a negative electrode current collector 1, wherein the second negative electrode active material layer includes lithium titanium oxide (LTO) 3a and single-walled carbon nanotubes (SWCNTs).

Herein, lithium titanium oxide does not participate in the performance of the battery in a normal operation state, but undergoes deintercalation of lithium ions when a short-circuit occurs in a fully charged state.

For example, in a fully charged state, lithium titanium oxide 3a may be present in the form of Li_{7/3}Ti_{5/3}O₄, while being present in the form of Li_{4/3}Ti_{5/3}O₄ at the initial stage of a short-circuit due to the deintercalation of lithium ions.

Due to the deintercalation of lithium ions, the negative electrode active material layer including lithium titanium oxide undergoes a rapid drop in electrical conductivity and may ensure the stability against an internal short-circuit due to an increase in resistance in the negative electrode.

According to the present disclosure, the second negative electrode active material layer is characterized in that it has a loading amount of 0.1 mAh/cm² or less.

According to an embodiment of the present disclosure, the loading amount of the second negative electrode active material layer may be 0.099 mAh/cm² or less, 0.095 mAh/cm² or less, 0.09 mAh/cm² or less, 0.090 mAh/cm² or less, 0.085 mAh/cm² or less, 0.08 mAh/cm² or less, 0.080 mAh/cm² or less, 0.075 mAh/cm² or less, 0.07 mAh/cm² or less, 0.070 mAh/cm² or less, 0.065 mAh/cm² or less, 0.06 mAh/cm² or less, 0.060 mAh/cm² or less, 0.055 mAh/cm² or less, 0.05 mAh/cm² or less, or 0.050 mAh/cm² or less. More particularly, the loading amount of the second negative electrode active material may be 0.01 mAh/cm² or more, 0.015 mAh/cm² or more, 0.02 mAh/cm² or more, 0.025 mAh/cm² or more, or 0.03 mAh/cm² or more, and 0.099 mAh/cm² or less, 0.095 mAh/cm² or less, 0.09 mAh/cm² or less, 0.090 mAh/cm² or less, 0.085 mAh/cm² or less, 0.08 mAh/cm² or less, 0.080 mAh/cm² or less, 0.075 mAh/cm² or less, 0.07 mAh/cm² or less, 0.070 mAh/cm² or less, 0.065 mAh/cm² or less, 0.06 mAh/cm² or less, 0.060 mAh/cm² or less, 0.055 mAh/cm² or less, or 0.05 mAh/cm² or less. For example, the loading amount of the second negative electrode active material may be 0.01 mAh/cm² or more and 0.1mAh/cm² or less, 0.01mAh/cm² or more and 0.099mAh/cm² or less, or 0.01mAh/cm² or more and 0.09mAh/cm² or less. When the loading amount of the second negative electrode active material layer satisfies the above-defined range, the second negative electrode active material layer may have a small thickness to provide an effect of improving the stability of the electrode against an internal short-circuit, while maintaining excellent cell capacity and fundamental performance of the electrode, but the scope of the present disclosure is not limited thereto.

According to another embodiment of the present disclosure, the second negative electrode active material layer may have a thickness of 3 µm or less. Particularly, the thickness of the second negative electrode active material layer may be 2.99 µm or less, 2.95 µm or less, 2.9 µm or less, 2.85 µm or less, 2.8 µm or less, 2.75 µm or less, 2.7 µm or less, 2.65 µm or less, 2.6 µm or less, 2.55 µm or less, 2.5 µm or less, 2.45 µm or less, 2.4 µm or less, 2.35 µm or less, 2.3 µm or less, 2.25 µm or less, 2.2 µm or less, 2.15 µm or less, 2.1 µm or less, 2.05 µm or less, 2.0 µm or less, or 2 µm or less. More particularly, the thickness of the second negative electrode active material layer may be 0.01 µm or more, 0.05 µm or more, 0.1 µm or more, 0.5 µm or more, or 1 µm or more, and 2.99 µm or less, 2.95 µm or less, 2.9 µm or less, 2.85 µm or less, 2.8 µm or less, 2.75 µm or less, 2.7 µm or less, 2.65 µm or less, 2.6 µm or less, 2.55 µm or less, 2.5 µm or less, 2.45 µm or less, 2.4 µm or less, 2.35 µm or less, 2.3 µm or less, 2.25 µm or less, 2.2 µm or less, 2.15 µm or less, 2.1 µm or less, 2.05 µm or less, 2.0 µm or less, or 2 µm or less. For example, the thickness of the second negative electrode active material layer may be 0.01 µm or more and 2.99 µm or less, 0.5 µm or more and 2.5 µm or less, or 1 µm or more and 2 µm or less. When the thickness of the second negative electrode active material layer satisfies the above-defined range, the second negative electrode active material layer may have a small thickness to provide an effect of improving the stability of the electrode against an internal short-circuit, but the scope of the present disclosure is not limited thereto.

According to an embodiment of the present disclosure, the second negative electrode active material layer may have a thickness corresponding to 1-5% based on the total thickness of the first negative electrode active material layer and the second negative electrode active material layer. Particularly, the second negative electrode active material layer may have a thickness corresponding to 1-3%, 2-3%, 2-2.5%, or 2.5-3%, based on the total thickness of the first negative electrode active material layer and the second negative electrode active material layer. When the thickness of the second negative electrode active material layer satisfies the above-defined range based on the total thickness of the first negative electrode active material layer and the second negative electrode active material layer, it is possible to provide advantageous effects in terms of improvement of the charge/discharge efficiency of the electrode and the stability of the electrode against an internal short-circuit, but the scope of the present disclosure is not limited thereto.

According to the present disclosure, lithium titanium oxide (LTO) is contained in the second negative electrode active material layer as a negative electrode active material, and the single-walled carbon nanotubes (SWCNTs) are contained in the second negative electrode active material layer as a conductive material.

In general, lithium titanium oxide (LTO) has a disadvantage in that it has lower electrical conductivity as compared to a carbonaceous material used conventionally as a negative electrode active material. However, when lithium titanium oxide is used in combination with single-walled carbon nanotubes, the electrical conductivity of the second negative electrode active material layer may be improved to a level equivalent to the carbonaceous material, and the second negative electrode active material layer functions as a resistance layer in the electrode to provide an excellent effect of improving the stability against an internal short-circuit. However, the mechanism of the present disclosure is not limited thereto.

According to an embodiment of the present disclosure, lithium titanium oxide may be represented by the following chemical formula 1:

[Chemical Formula 1] LiₐTi_{b}O₄

wherein 0.5 ≤ a ≤ 3, and 1 ≤ b ≤ 2.5.

Particular examples of lithium titanium oxide include Li_{0.8}Ti_{2.2}O₄, Li_{2.67}Ti_{1.33}O₄, LiTi₂O₄, Li_{1.33}Ti_{1.67}O₄, Li_{1.14}Ti_{1.71}O₄, Li₂Ti₅O₁₂, Li₄Ti₅O₁₂, or the like, but are not limited thereto.

Lithium titanium oxide may be present as primary particles, or secondary particles formed by aggregation of a plurality of primary particles. For example, lithium titanium oxide may have an average particle diameter (D₅₀) of about 0.1-3 µm. The average particle diameter (D₅₀) means the particle diameter at the point of 50% in the particle number accumulated distribution as a function of particle diameter. The average particle diameter may be determined by using the laser diffraction method. Particularly, a powder to be analyzed is dispersed in a dispersion medium and introduced to a commercially available laser diffraction particle size analyzer (e.g. Microtrac S3500) to measure a difference in diffraction pattern depending on particle size, when the particles pass through laser beams, and then particle size distribution can be calculated.

For example, the content of lithium titanium oxide may be 95-100 wt%, such as 96-98 wt%, or 97-98 wt%, based on the total weight of the second negative electrode active material layer. When the content of lithium titanium oxide falls within the above-defined range, it is possible to realize an advantageous effect in terms of stability.

The single-walled carbon nanotubes are a material including hexagons formed by binding of six carbon atoms, wherein the hexagons are interconnected to form a tube-like shaped carbon nanotube having a single wall (graphite surface). The single-walled carbon nanotubes show excellent electrical properties caused by its one-dimensional structure and shows various electrical properties depending on its hexagonal honeycomb-shaped molecular chirality structure and diameter.

According to an embodiment of the present disclosure, the single-walled carbon nanotubes may be preliminarily dispersed in the form of a dispersion containing a dispersant and/or a dispersion medium, and then contained in the negative electrode active material layer in order to facilitate dispersion in the negative electrode active material layer, particularly in the second negative electrode active material layer. When the single-walled carbon nanotubes are used in the form of such a preliminarily formed dispersion, it is possible to impart uniform conductivity, and to introduce a predetermined amount of single-walled carbon nanotubes with ease, even when they are used in a significantly small amount as described hereinafter. There is no particular limitation in the type of the dispersant and/or dispersion medium, as long as it can disperse carbon nanotubes. For example, the dispersant may include hydrogenated nitrile butadiene rubber (H-NBR), polyvinyl pyrrolidone (PVP), carboxymethyl cellulose (CMC), or the like, and the dispersion medium may include N-methyl-2-pyrrolidone (NMP), water, or the like.

According to an embodiment of the present disclosure, the single-walled carbon nanotubes may have a length of 1-30 µm. Particularly, the single-walled carbon nanotubes may have a length of 1-15 µm or 15-30 µm. When the single-walled carbon nanotubes satisfy the above-defined range of aspect ratio, it is possible to realize an advantageous effect in terms of electrical conductivity, but the scope of the present disclosure is not limited thereto. The aspect ratio may be determined by calculating the average of the aspect ratios of 15 single-walled carbon nanotubes having a higher aspect ratio and the aspect ratios of 15 single-walled carbon nanotubes having a lower aspect ratio, when the single-walled carbon nanotube powder is observed through scanning electron microscopy (SEM).

According to the embodiment of the present disclosure, the single-walled carbon nanotubes may have an average diameter of 2-100 nm of the section orthogonal to the longitudinal direction thereof. Particularly, the average diameter of the single-walled carbon nanotubes may be 2-70 nm, or 70-100 nm. When the average diameter of the single-walled carbon nanotubes satisfies the above-defined range, it is possible to realize an advantage effect in that the negative electrode maintains excellent electrical conductivity even when the single-walled carbon nanotubes are used in a significantly small amount, but the scope of the present disclosure is not limited thereto. The average diameter of the single-walled carbon nanotubes may be determined by identifying an image thereof taken by transmission electron microscopy (TEM).

According to an embodiment of the present disclosure, the single-walled carbon nanotubes may have a BET specific surface area of 500-1,600 m²/g. Particularly, the single-walled carbon nanotubes may have a BET specific surface area of 500-1,500 m²/g, or 700-1,500 m²/g. When the above-defined range is satisfied, a conductive material dispersion having a desired solid content may be derived. The BET specific surface area may be determined through the nitrogen adsorption BET method.

According to another embodiment of the present disclosure, the single-walled carbon nanotubes may have a length of 1-30 µm, an average diameter of 2-100 nm of the section orthogonal to the longitudinal direction thereof, and a BET specific surface area of 500-1,600 m²/g. Particularly, when single-walled carbon nanotubes satisfying the above-defined physical properties are used, it is possible to realize an advantageous effect in that an electrical network may be constructed even with a small amount, but the scope of the present disclosure is not limited thereto.

According to an embodiment of the present disclosure, the single-walled carbon nanotubes may be used in an amount of 0.1-3 wt% based on the total weight of the second negative electrode active material layer. Particularly, the content of the single-walled carbon nanotubes may be 0.01-3 wt%, 0.01-1 wt%, or 1-3 wt%, based on the total weight of the second negative electrode active material layer.

According to another embodiment of the present disclosure, the content of the single-walled carbon nanotubes may be 0.01-5 parts by weight, 0.01-4 parts by weight, or 0.05-3.3 parts by weight, based on 100 parts by weight of lithium titanium oxide (LTO) in the second negative electrode active material layer.

When the content of the single-walled carbon nanotubes satisfies the above-defined range, it is possible to construct an electrical network sufficiently in the negative electrode active material layer even with a significantly small amount, and thus to realize an advantageous effect in terms of conservation of energy density, but the scope of the present disclosure is not limited thereto.

According to the present disclosure, the first negative electrode active material layer includes a negative electrode active material other than lithium titanium oxide (LTO).

The first negative electrode active material layer includes a carbonaceous active material, a silicon-based active material or a mixture thereof.

Particular examples of the carbonaceous active material may include artificial graphite, natural graphite, hard carbon, soft carbon, graphitizable carbon fibers, graphitizable mesocarbon microbeads, petroleum cokes, baked resin, carbon fibers, pyrolyzed carbon or a mixture thereof, but are not limited thereto. Particular examples of the silicon-based active material may include Si, silicon oxide represented by SiOₓ (0 < x ≤ 2) or a mixture thereof, but are not limited thereto.

In general, artificial graphite is prepared by carbonizing a raw material, such as coal tar, coal tar pitch or petroleum-based heavy oil, at 2,500°C or higher. After the graphitization, artificial graphite is controlled in particle size through pulverization, formation of secondary particles, or the like, and then is used as a negative electrode active material. In the case of artificial graphite, crystals thereof are distributed randomly in the particles. In addition, artificial graphite has lower spheroidicity as compared to natural graphite and shows a slightly sharp shape. Artificial graphite may include commercially available mesophase carbon microbeads (MCMBs), mesophase pitch-based carbon fibers (MPCFs), block-like graphitized artificial graphite, powder-like graphitized artificial graphite, or the like. Such artificial graphite has a spheroidicity of 0.91 or less, preferably 0.6-0.91, or 0.7-0.9. In addition, artificial graphite may have a particle diameter of 5-30 µm, or 10-25 µm.

Natural graphite is generally present in the form of a sheet-like aggregate before it is processed. Sheet-like particles are converted into spherical shapes having a smooth surface through post-treatment processes, such as particle pulverization and reassemblage steps, so that they may be used as an active material for manufacturing an electrode. Natural graphite used according to an embodiment of the present disclosure preferably has a spheroidicity larger than 0.91 and equal to or less than 0.97, 0.93-0.97, or 0.94-0.96. In addition, natural graphite may have a particle diameter of 5-30 µm, or 10-25 µm.

The first negative electrode active material layer may include two types or more of active materials. In this case, different active materials may be distributed from the vicinity of the current collector of the active material layer toward the surface direction. In a variant, even in the case of the same type of active material, two types of active materials different in terms of average particle diameter or shape may be used. Further, two types or more of active materials different in terms of both the type of material and the shape or average diameter may be used.

According to an embodiment of the present disclosure, the first negative electrode active material layer may further include a conductive material without adversely affecting the objects of the present disclosure. The conductive material is not particularly limited, as long as it has conductivity, while causing no chemical change in the corresponding battery. Particular examples of the conductive material include: graphite, such as natural graphite or artificial graphite; carbon nanotubes; carbon black, such as acetylene black, Ketjen black, channel black, furnace black, lamp black or thermal black; conductive fibers, such as carbon fibers or metallic fibers; fluorocarbon; metal powder, such as aluminum or nickel powder; conductive whisker, such as zinc oxide or potassium titanate; conductive metal oxide, such as titanium oxide; and conductive materials, such as polyphenylene derivatives.

According to another embodiment of the present disclosure, the first negative electrode active material layer may include a negative electrode active material, a conductive material and a binder polymer.

Particular examples of the binder polymer may include various types of polymers, such as polyvinylidene fluoride-co-hexafluoropropylene (PVDF-co-HFP), polyvinylidene fluoride, polyacrylonitrile, polymethyl methacrylate, polyvinyl alcohol, carboxymethyl cellulose (CMC), starch, hydroxypropyl cellulose, regenerated cellulose, polyvinyl pyrrolidone, tetrafluoroethylene, polyethylene, polypropylene, polyacrylic acid, styrene butadiene rubber (SBR), fluoro-rubber, various copolymers, or the like. In addition, a part of the binder polymer may function as a thickener which increases the viscosity of an active material slurry to improve the dispersion properties of the active material and conductive material.

According to an embodiment of the present disclosure, the first negative electrode active material layer may have a loading amount of 1-10 mAh/cm², particularly 3-3.6 mAh/cm², but is not limited thereto. In addition, the thickness of the first negative electrode active material layer is not particularly limited, as long as it satisfies the above-defined thickness ratio to the second negative electrode active material layer. For example, the first negative electrode active material layer may have a thickness of 3.0-3.6 µm, or 3.3-3.5 µm.

In another aspect of the present disclosure, there is provided a secondary battery including a positive electrode, a negative electrode and a separator interposed between the negative electrode and the positive electrode, wherein the negative electrode includes the negative electrode according to an embodiment of the present disclosure.

According to an embodiment of the present disclosure, the secondary battery may be a lithium secondary battery, including a lithium metal secondary battery, a lithium-ion secondary battery, a lithium polymer secondary battery or a lithium-ion polymer secondary battery.

According to an embodiment of the present disclosure, the positive electrode may include a positive electrode current collector, and a positive electrode active material layer disposed on at least one surface of the positive electrode current collector.

In general, the positive electrode current collector may have a thickness of about 3-500 µm. The positive electrode current collector is not particularly limited, as long as it causes no chemical change in the corresponding battery and has high conductivity. Particular examples of the positive electrode current collector may include stainless steel, aluminum, nickel, titanium, baked carbon, aluminum or stainless steel surface-treated with carbon, nickel, titanium or silver, or the like. The positive electrode current collector may have fine surface irregularities formed on the surface thereof to increase the adhesion of a positive electrode active material. In addition, the positive electrode current collector may have various shapes, such as a film, a sheet, a foil, a net, a porous body, a foam or non-woven web body, or the like.

According to an embodiment of the present disclosure, the positive electrode active material layer may include a positive electrode active material, a positive electrode conductive material and a positive electrode binder polymer.

For example, the positive electrode active material may include: a lithium transition metal oxide; lithium metal iron phosphate; lithium nickel-manganese-cobalt oxide; lithium nickel-manganese-cobalt oxide partially substituted with another transition metal; or two or more of them, but is not limited thereto. Particular examples of the positive electrode active material may include, but are not limited to: layered compounds, such as lithium cobalt oxide (LiCoO₂) and lithium nickel oxide (LiNiO₂), or those compounds substituted with one or more transition metals; lithium manganese oxides such as those represented by the chemical formula of Li₁₊ₓMn₂₋ₓO₄ (wherein x is 0-0.33), LiMnO₃, LiMn₂O₃ and LiMnO₂; lithium copper oxide (Li₂CuO₂); vanadium oxides such as LiV₃O₈, LiV₃O₄, V₂O₅ or Cu₂V₂O₇; Ni-site type lithium nickel oxides represented by the chemical formula of LiNi₁₋ₓMₓO₂ (wherein M is Co, Mn, Al, Cu, Fe, Mg, B or Ga, and x is 0.01-0.3); lithium manganese composite oxides represented by the chemical formula of LiMn₂₋ₓMₓO₂ (wherein M is Co, Ni, Fe, Cr, Zn or Ta, and x is 0.01-0.1) or Li₂Mn₃MO₈ (wherein M is Fe, Co, Ni, Cu or Zn); lithium metal phosphate LiMPO₄ (wherein M is Fe, Co, Ni or Mn); lithium nickel-manganese-cobalt oxide, Li₁₊ₓ(NiₐCo_{b}Mn_{c})₁₋ₓO₂ (wherein x is 0-0.03, a is 0.3-0.95, b is 0.01-0.35, c is 0.01-0.5, a + b + c = 1); lithium nickel-manganese-cobalt oxide partially substituted with aluminum, Liₐ[Ni_{b}Co_{c}Mn_{d}Alₑ]_{1-f}M1_{f}O₂ (wherein M1 represents at least one selected from the group consisting of Zr, B, W, Mg, Ce, Hf, Ta, La, Ti, Sr, Ba, F, P and S, 0.8 ≤ a ≤ 1.2, 0.5 ≤ b ≤ 0.99, 0 < c < 0.5, 0 < d < 0.5, 0.01 ≤ e ≤ 0.1, and 0 ≤ f ≤ 0.1); lithium nickel-manganese-cobalt oxide partially substituted with another transition metal, Li₁₊ₓ(NiₐCo_{b}Mn_{c}M_{d})₁₋ₓO₂ (wherein x is 0-0.03, a is 0.3-0.95, b is 0.01-0.35, c is 0.01-0.5, d is 0.001-0.03, a + b + c + d = 1, and M represents at least one selected from the group consisting of Fe, V, Cr, Ti, W, Ta, Mg and Mo); disulfide compounds; Fe₂(MoO₄)₃; or the like.

In general, the positive electrode conductive material is added in an amount of 1-50 wt% based on the total weight of the mixture including the positive electrode active material. The positive electrode conductive material is not particularly limited, as long as it causes no chemical change in the corresponding battery and has conductivity. For example, the conductive material include any one selected from: graphite, such as natural graphite or artificial graphite; carbon black, such as acetylene black, Ketjen black, channel black, furnace black, lamp black or thermal black; conductive fibers, such as carbon fibers or metallic fibers; carbon fluoride; metal powder, such as aluminum or nickel powder; conductive whisker, such as zinc oxide or potassium titanate; conductive metal oxide, such as titanium oxide; and conductive materials, such as polyphenylene derivatives, or the like.

In addition, the positive electrode binder polymer is an ingredient which assists binding of the positive electrode active material with the positive electrode conductive material, and binding to the current collector. In general, the positive electrode binder polymer may be added in an amount of 0.5-50 wt%, based on the total weight of the slurry including the positive electrode active material. Particular examples of the binder polymer include polyvinylidene fluoride, polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylene-propylene-diene monomer terpolymer (EPDM), sulfonated EPDM, styrene butadiene rubber, fluororubber, various copolymers, or the like.

There is no particular limitation in the separator used in combination with the electrode according to the present disclosure. The separator is interposed between the positive electrode and the negative electrode to separate them from each other and includes an insulating thin film having high ion permeability and mechanical strength. Any separator may be used with no particular limitation, as long as it is one used generally for a secondary battery. Particular examples of the separator include a porous polymer film, such as a porous polymer film made of ethylene homopolymer, propylene homopolymer, ethylene/butene copolymer, ethylene/butene copolymer, ethylene/hexene copolymer, ethylene/methacrylate copolymer, or the like, or a laminated structure of two or more layers of such porous polymer films. In addition, a conventional porous non-woven web, such as a non-woven web made of high-melting point glass fibers, polyethylene terephthalate fibers, or the like, may be used.

In addition, a separator coated with inorganic particles, a binder polymer or a mixture of inorganic particles with a binder polymer may be used in order to ensure the heat resistance and mechanical strength, optionally in the form of a monolayer structure or multilayer structure. Further, when a solid electrolyte, such as a polymer, is used as an electrolyte, the solid electrolyte may function also as a separator.

### EXAMPLES

Examples will be described more fully hereinafter so that the present disclosure can be understood with ease. However, the following examples are for illustrative purposes only and the scope of the present disclosure is not limited thereto, being defined by the appended set of claims.

### [Manufacture of Secondary battery]

The secondary battery according to each of Examples and Comparative Examples was obtained as follows.

### Example 1

### <Manufacture of Negative Electrode>

First, 2 parts by weight of styrene butadiene rubber (SBR) and 1 parts by weight of carboxymethyl cellulose (CMC) as binder polymers were dispersed in distilled water as a solvent, and then 1 parts by weight of carbon black (Super C65) as a conductive material and 96 parts by weight of flake-type artificial graphite (largest length 20 µm, average aspect ratio 3.5) as a negative electrode active material were added thereto to obtain a homogeneous first negative electrode active material slurry. The first negative electrode active material slurry was applied to a copper current collector having a thickness of 15 µm and dried at 70°C in a comma coater at a rate of 0.2 m/min to form a first negative electrode active material layer having a loading amount of 3.6 mAh/cm² and a thickness of 112 µm.

Next, 1.5 parts by weight of a binder polymer (polyvinylidene fluoride, PVDF), 1.5 parts by weight of single-walled carbon nanotubes (SWCNTs) having an average diameter of 10 nm as a conductive material and 97 parts by weight of lithium titanium oxide (Li₄Ti₅O₁₂, average particle diameter (D₅₀, 0.9 µm) as a negative electrode active material were dispersed in N-methyl pyrrolidone as a dispersion medium to obtain a homogeneous second negative electrode active material slurry.

Then, the second negative electrode active material slurry was applied to the surface of the first negative electrode active material layer and dried at 120°C in a comma coater at a rate of 0.2 m/min to form a second negative electrode active material layer. Herein, the loading amount of LTO in the second negative electrode active material layer was 0.06 mAh/cm², and the second negative electrode active material layer was formed to have a thickness of 2.5 µm.

### <Manufacture of Positive Electrode>

First, Li[Ni_{0.69}Mn_{0.2}Co_{0.2}]O₂ (NCM-622) as a positive electrode active material, carbon black as a conductive material and PVDF as a binder polymer were added to N-methyl pyrrolidone (NMP) as a solvent at a weight ratio of 96:2;2 to prepare a positive electrode active material slurry. The positive electrode active material slurry was applied to an aluminum current collector having a thickness of 15 µm and dried at 120°C by using a comma coater at a rate of 0.1 m/min, followed by drying, to obtained a positive electrode. Herein, the positive electrode active material layer had a loading amount of 3.26 mAh/cm² based on the dry weight.

### <Manufacture of Lithium Secondary Battery>

LiPF₆ was dissolved in an organic solvent containing ethylene carbonate (EC) mixed with ethylmethyl carbonate (EMC) at a volume ratio of 3:7 to a concentration of 1.0 M, and 0.5 wt% of vinylene carbonate (VC) was added thereto to prepare an electrolyte.

After a porous polypropylene separator was interposed between the negative electrode and the positive electrode prepared as described above, and the electrolyte was injected thereto to obtain a lithium secondary battery.

### Example 2

A negative electrode was obtained in the same manner as Example 1, except that the second negative electrode active material layer was formed to have a loading amount of LTO of 0.065 mAh/cm². Then, a secondary battery was obtained by using the negative electrode.

### Example 3

A negative electrode was obtained in the same manner as Example 1, except that the second negative electrode active material layer was formed to have a loading amount of LTO of 0.07 mAh/cm². Then, a secondary battery was obtained by using the negative electrode.

### Example 4

A negative electrode was obtained in the same manner as Example 1, except that the first negative electrode active material layer was formed to have a thickness of 136 µm. Then, a secondary battery was obtained by using the negative electrode.

### Comparative Example 1

First, 2 parts by weight of SBR and 1 parts by weight of CMC as binders were dispersed in distilled water as a solvent, and then 1 parts by weight of carbon black (Super C65) as a conductive material and 96 parts by weight of flake-type artificial graphite (largest length 20 µm, average aspect ratio 1:2.5) as a negative electrode active material were added thereto to obtain a negative electrode active material slurry. The negative electrode active material slurry was applied to a copper current collector having a thickness of 15 µm and dried at 70°C in a comma coater at a rate of 0.2 m/min to form a first negative electrode active material layer having a loading amount of 3.6 mAh/cm².

A secondary battery was obtained in the same manner as Example 1, except that the obtained negative electrode was used.

### Comparative Example 2

A secondary battery was obtained in the same manner as Comparative Example 1, except that a negative electrode active material including artificial graphite and lithium titanium oxide (Li₄Ti₅O₁₂, average particle diameter 0.9 µm) at a weight ratio of 97:3 was used as a negative electrode active material, unlike Comparative Example 1 using artificial graphite alone.

### Comparative Example 3

### <Manufacture of Negative Electrode>

A first negative electrode active material layer was formed in the same manner as Example 1.

Next, 1.5 parts by weight of a binder polymer (polyvinylidene fluoride, PVDF), 1.5 parts by weight of multi-walled carbon nanotubes (MWCNTs) having an average diameter of 30 nm as a conductive material and 97 parts by weight of lithium titanium oxide (Li₄Ti₅O₁₂, average particle diameter (D₅₀, 0.9 µm) as a negative electrode active material were dispersed in N-methyl pyrrolidone as a dispersion medium to obtain a homogeneous second negative electrode active material slurry.

Then, the second negative electrode active material slurry was applied to the surface of the first negative electrode active material layer and dried at 120°C in a comma coater at a rate of 0.2 m/min to form a second negative electrode active material layer. Herein, the loading amount of LTO in the second negative electrode active material layer was 0.06 mAh/cm², and the second negative electrode active material layer was formed to have a thickness of 2.5 µm.

After that, a secondary battery was obtained in the same manner as Example 1.

### Comparative Example 4

### <Manufacture of Negative Electrode>

A secondary battery was obtained in the same manner as Comparative Example 3, except that MWCNTs were used in an amount of 3 parts by weight.

### Comparative Example 5

### <Manufacture of Negative Electrode>

A secondary battery was obtained in the same manner as Example 1, except that the second negative electrode active material layer was formed to have a loading amount of LTO of 1.0 mAh/cm² and a thickness of 6.0 µm.

### [Methods for Evaluating Physical Properties]

### Evaluation of Thickness of Second Negative Electrode Active Material Layer

The thickness of the second negative electrode active material layer was determined from the section of each electrode through an image taken by transmission electron microscopy (TEM).

### Performance of Battery

### Method for Evaluating Capacity of Mono-Cell

The negative electrode according to each of Examples and Comparative Examples, a positive electrode and a porous polypropylene separator were assembled, and an electrolyte was injected thereto to obtain a mono-cell. After carrying out wetting for 24 hours, the mono-cell was activated by charging it at 0.1 C to SOC 30% and was subjected to 3 charge/discharge cycles by charging it in a constant current/constant voltage (CC/CV) mode at 0.33 C to 4.2 V with a cut-off current of 0.05 C and discharging it in a CC mode at 0.33 C to a cut-off voltage of 3.0 V to determine the discharge capacity at the third cycle. The results are shown in the following Table 1.

### Method for Evaluating Resistance of Mono-Cell

Each mono-cell was fully charged in a CC/CV mode at 0.33 C to 4.2 V with a cut-off current of 0.05 C, and then the resistance depending on depth of discharge (DOD) was determined. Herein, the resistance was evaluated by applying pulse discharge current for 10 seconds, eliminating current application for 30 seconds, applying discharge current for 10 seconds in the direction of charging, and then calculating the resistance from a change in voltage during discharge.

### Method for Evaluating Electrode Interfacial Resistance

The electrode interfacial resistance was determined by using a 4-point probe. A change in electric potential occurring on the surface was measured by allowing constant current to flow from the probe. In this manner, a change in resistance/interfacial resistance depending on electrode materials, compositions thereof and preparation conditions thereof can be determined.

### Method for Evaluating Internal Short-Circuit

When fabricating a mono-cell, a hole having a size of 1 cm x 1 cm was perforated in the separator, and covered with a rectangular separator having a size of 1.5 cm x 5 cm. After the mono-cell was wetted with an electrolyte for 24 hours, the mono-cell was activated by charging it at 0.1 C to SOC 30%, and then charged in a CC/CV mode at 0.33 C to 4.2 V with a cut-off current of 0.5 C. The rectangular separator covering the hole was removed to allow the positive electrode and the negative electrode to be in direct contact with each other. A change in temperature and voltage occurring at the perforated site of the separator was measured and recorded.

### [Evaluation Results]

The physical properties of the negative electrode active material layer according to each of Examples and Comparative Examples and the performance of the battery using the same were evaluated in the above-described manner. The results are shown in the following Tables 1 and 2.

**[Table 1]**

| | First negative electrode active material layer | | Second negative electrode active material layer | | Mono-cell capacity (mAh) | Increase/decrease in mono-cell capacity based on Comp. Ex. 1 (%) | Mono-cell resistance (mohm) | Electrodeinterfacial resistance (ohm/cm²) |
|---|---|---|---|---|---|---|---|---|
| | Thickness (µm) | Loading amount (mAh/cm²) | Thickness (µm) | Loading amount (mAh/cm²) | | | | |
| Ex. 1 | 112 | 3.6 | 2.5 | 0.06 | 38.4 | 3% decrease | 2027 | 0.4811 |
| Ex. 2 | 112 | 3.6 | 3.0 | 0.065 | 37.4 | 5.6% decrease | 2208 | 0.5501 |
| Ex. 3 | 112 | 3.6 | 3.3 | 0.07 | 35.2 | 11.3% decrease | 2511 | 0.6325 |
| Ex. 4 | 136 | 4.4 | 2.5 | 0.06 | 38.3 | 3% decrease | 2033 | 0.5012 |
| Comp. Ex. 1 | 112 | 3.6 | | | 39.6 | Reference | 1897 | 0.001672 |
| Comp. Ex. 2 | 112 | 3.6 | | | 38.4 | 3% decrease | 2110 | 0.3626 |
| Comp. Ex. 3 | 112 | 3.6 | 2.5 | 0.06 | 37.1 | 6% decrease | 2154 | 0.6377 |
| Comp. Ex. 4 | 112 | 3.6 | 2.5 | 0.06 | 37.3 | 6% decrease | 2125 | 0.6147 |
| Comp. Ex. 5 | 112 | 3.6 | 6.0 | 1.0 | 31.7 | 20% decrease | 2986 | 0.8125 |

**[Table 2]**

| | Peak temperature (°C) | Change in voltage depending on time (v) | | | | | | |
|---|---|---|---|---|---|---|---|---|
| | | 1s | 2s | 10s | 20s | 40s | 80s | 100s |
| Ex. 1 | 26.7 | 4.214 | 2.071 | 1.104 | 0.775 | 0.626 | *0.555* | 0.519 |
| Ex. 2 | 32.8 | 4.210 | 2.108 | 1.098 | 0.879 | 0.625 | 0.618 | 0.469 |
| Ex. 3 | 33.8 | 4.198 | 2.086 | 1.076 | 0.785 | 0.683 | 0.598 | 0.483 |
| Ex. 4 | 28.1 | 4.204 | 2.081 | 1.100 | 0.738 | 0.622 | 0.535 | 0.522 |
| Comp. Ex. 1 | 40.9 | 4.212 | 1.148 | 0.564 | 0.418 | 0.355 | 0.281 | 0.259 |
| Comp. Ex. 2 | 39.6 | 4.183 | 1.589 | 0.801 | 0.52 | 0.398 | 0.325 | 0.291 |
| Comp. Ex. 3 | 38.1 | 4.211 | 1.628 | 0.836 | 0.618 | 0.401 | 0.311 | 0.258 |
| Comp. Ex. 4 | 37.7 | 4.212 | 1.688 | 0.908 | 0.664 | 0.413 | 0.366 | 0.281 |
| Comp. Ex. 5 | 31.9 | 4.179 | 1.681 | 0.868 | 0.652 | 0.411 | 0.345 | 0.244 |

It can be seen from the above results that it is possible to ensure the stability of a battery by reducing a change in temperature and voltage upon the occurrence of an internal short-circuit, while maintaining excellent cell capacity and resistance, when using single-walled carbon nanotubes in the second negative electrode active material layer and providing the second negative electrode active material layer with a thickness of less than 3 µm.

The present disclosure has been described in detail. However, it should be understood that the detailed description and specific examples, while indicating preferred embodiments of the disclosure, are given by way of illustration only, since various changes and modifications within the scope of the claims will become apparent to those skilled in the art from this detailed description.

## Claims

1. A negative electrode, comprising:
a current collector;
a first negative electrode active material layer disposed on at least one surface of the current collector; and
a second negative electrode active material layer disposed on the first negative electrode active material layer,
wherein the second negative electrode active material layer comprises lithium titanium oxide (LTO) and single-walled carbon nanotubes (SWCNTs),
wherein the first negative electrode active material layer comprises a carbonaceous active material, a silicon-based active material or a mixture thereof, and the first negative electrode active material layer comprises a negative electrode active material other than the lithium titanium oxide (LTO), and
the second negative electrode active material layer has a loading amount of 0.1 mAh/cm² or less.

2. The negative electrode according to claim 1, wherein the second negative electrode active material layer has a loading amount of 0.01 to 0.1 mAh/cm².

3. The negative electrode according to claim 1, wherein the second negative electrode active material has a thickness of 3 µm or less.

4. The negative electrode according to claim 1, wherein the second negative electrode active material layer has a thickness corresponding to 1 to 5% based on the total thickness of the first negative electrode active material layer and the second negative electrode active material layer.

5. The negative electrode according to claim 1, wherein the single-walled carbon nanotubes have a length of 1 to 30 µm, determined by calculating the average of the aspect ratios of 15 single-walled carbon nanotubes having a higher aspect ratio and the aspect ratios of 15 single-walled carbon nanotubes having a lower aspect ratio, when the single-walled carbon nanotube powder is observed through scanning electron microscopy (SEM).

6. The negative electrode according to claim 1, wherein the single-walled carbon nanotubes have an average diameter of 2 to 100 nm of the section orthogonal to the longitudinal direction thereof, being the average diameter determined by identifying an image of the single-walled carbon nanotubes taken by transmission electron microscopy (TEM), and a BET specific surface area of 500 to 1,600 m²/g, being the BET specific surface area determined through the nitrogen adsorption BET method.

7. The negative electrode according to claim 1, wherein the content of the single-walled carbon nanotubes is 0.01 to 3 wt% based on the total weight of the second negative electrode active material layer.

8. A secondary battery comprising a positive electrode, a negative electrode and a separator interposed between the positive electrode and the negative electrode, wherein the negative electrode is the same as defined in any one of claims 1 to 7.

9. The secondary battery according to claim 8, which is a lithium secondary battery.

## Patentansprüche

1. Negative Elektrode, umfassend:
einen Stromsammler;
eine erste negative aktive Elektrodenmaterial-Schicht, welche an wenigstens einer Fläche des Stromsammlers angeordnet ist; und
eine zweite negative aktive Elektrodenmaterial-Schicht, welche an der ersten negativen aktiven Elektrodenmaterial-Schicht angeordnet ist,
wobei die zweite negative aktive Elektrodenmaterial-Schicht Lithium-Titanoxid (LTO) und einwandige Kohlenstoff-Nanoröhren (SWCNTs) umfasst,
wobei die erste negative aktive Elektrodenmaterial-Schicht ein kohlenstoffhaltiges aktives Material, ein siliziumbasiertes aktives Material oder eine Mischung daraus umfasst und die erste negative aktive Elektrodenmaterial-Schicht ein negatives aktives Elektrodenmaterial umfasst, welches verschieden von dem Lithium-Titanoxid (LTO) ist, und die zweite negative aktive Elektrodenmaterial-Schicht eine Lademenge von 0,1 mAh/cm² oder weniger aufweist.

2. Negative Elektrode nach Anspruch 1, wobei die zweite negative aktive Elektrodenmaterial-Schicht eine Lademenge von 0,01 bis 0,1 mAh/cm² aufweist.

3. Negative Elektrode nach Anspruch 1, wobei das zweite negative aktive Elektrodenmaterial eine Dicke von 3 µm oder weniger aufweist.

4. Negative Elektrode nach Anspruch 1, wobei die zweite negative aktive Elektrodenmaterial-Schicht eine Dicke aufweist, welche 1 bis 5% auf Grundlage der Gesamtdicke der ersten negativen aktiven Elektrodenmaterial-Schicht und der zweiten negativen aktiven Elektrodenmaterial-Schicht entspricht.

5. Negative Elektrode nach Anspruch 1, wobei die einwandigen Kohlenstoff-Nanoröhren eine Länge von 1 bis 30 µm aufweisen, bestimmt durch Berechnen des Durchschnitts der Seitenverhältnisse von 15 einwandigen Kohlenstoff-Nanoröhren mit einem höheren Seitenverhältnis und der Seitenverhältnisse von 15 einwandigen Kohlenstoff-Nanoröhren mit einem niedrigeren Seitenverhältnis, wenn das einwandige Kohlenstoff-Nanoröhrenpulver durch Scan-Elektronenmikroskopie (SEM) betrachtet wird.

6. Negative Elektroden nach Anspruch 1, wobei die einwandigen Kohlenstoff-Nanoröhren einen durchschnittlichen Durchmesser von 2 bis 100 nm des Querschnitts senkrecht zu der longitudinalen Richtung davon aufweisen, welcher der durchschnittliche Durchmesser ist, welcher bestimmt wird durch Identifizieren eines Bilds der einwandigen Kohlenstoff-Nanoröhren, genommen durch Transmission-Elektronenmikroskopie (TEM), sowie eine BET-spezifische Oberfläche von 500 bis 1600 m²/g, wobei die BET-spezifische Oberfläche durch das Stickstoffadsorption-BET-Verfahren bestimmt wird.

7. Negative Elektrode nach Anspruch 1, wobei der Gehalt der einwandigen Kohlenstoff-Nanoröhren 0,01 bis 3 Gewicht-% auf Grundlage des Gesamtgewichts der zweiten negativen aktiven Elektrodenmaterial-Schicht beträgt.

8. Sekundärbatterie, umfassend eine positive Elektrode, eine negative Elektrode und einen zwischen der positiven Elektrode und der negativen Elektrode eingefügten Separator, wobei die negative Elektrode dieselbe ist wie in einem beliebigen der Ansprüche 1 bis 7 definiert.

9. Sekundärbatterie nach Anspruch 8, welche eine Lithium-Sekundärbatterie ist.

## Revendications

1. Électrode négative, comprenant :
un collecteur de courant ;
une première couche de matériau actif d'électrode négative disposée sur au moins une surface du collecteur de courant,
une deuxième couche de matériau actif d'électrode négative disposée sur la première couche de matériau actif d'électrode négative,
dans laquelle la deuxième couche de matériau actif d'électrode négative comprend de l'oxyde de lithium-titane (LTO) et des nanotubes de carbone monofeuillets (SWCNT),
dans laquelle la première couche de matériau actif d'électrode négative comprend un matériau actif carboné, un matériau actif à base de silicium ou un mélange de ceux-ci, et la première couche de matériau actif d'électrode négative comprend un matériau actif d'électrode négative autre que l'oxyde de lithium-titane (LTO), et
la deuxième couche de matériau actif d'électrode négative présente une quantité de charge de 0,1 mAh/cm² ou moins.

2. Électrode négative selon la revendication 1, dans laquelle la deuxième couche de matériau actif d'électrode négative présente une quantité de charge de 0,01 à 0,1 mAh/cm².

3. Électrode négative selon la revendication 1, dans laquelle le deuxième matériau actif d'électrode négative présente une épaisseur de 3 µm ou moins.

4. Électrode négative selon la revendication 1, dans laquelle la deuxième couche de matériau actif d'électrode négative présente une épaisseur correspondant à 1 à 5 % par rapport à l'épaisseur totale de la première couche de matériau actif d'électrode négative et de la deuxième couche de matériau actif d'électrode négative.

5. Électrode négative selon la revendication 1, dans laquelle les nanotubes de carbone monofeuillets présentent une longueur de 1 à 30 µm, déterminée par calcul de la moyenne des rapports d'aspect de 15 nanotubes de carbone monofeuillets présentant un rapport d'aspect supérieur et des rapports d'aspect de 15 nanotubes de carbone monofeuillets présentant un rapport d'aspect inférieur, lorsque la poudre de nanotubes de carbone monofeuillets est observée par microscopie électronique à balayage (MEB).

6. Électrode négative selon la revendication 1, dans laquelle les nanotubes de carbone monofeuilllets présentent un diamètre moyen de 2 à 100 nm de la section orthogonale à la direction longitudinale de ceux-ci, étant le diamètre moyen déterminé par identification d'une image des nanotubes de carbone monofeuilllets prise par microscopie électronique en transmission (TEM), et une surface spécifique BET de 500 à 1 600 m²/g, étant la surface spécifique BET déterminée par le procédé d'adsorption d'azote BET.

7. Électrode négative selon la revendication 1, dans laquelle la teneur en nanotubes de carbone monofeuillets est de 0,01 à 3 % en poids par rapport au poids total de la deuxième couche de matériau actif d'électrode négative.

8. Batterie secondaire comprenant une électrode positive, une électrode négative et un séparateur interposé entre l'électrode positive et l'électrode négative, dans laquelle l'électrode négative est la même que celle définie dans l'une quelconque des revendications 1 à 7.

9. Batterie secondaire selon la revendication 8, qui est une batterie secondaire au lithium.
